(19) Europäisches Patentamt
European Patent Office
Office européen des brevets

(11) **EP 2 420 855 A1**

(12) **EUROPEAN PATENT APPLICATION**

(43) Date of publication:
**22.02.2012 Bulletin 2012/08**

(51) Int Cl.:
***G01S 5/02*** *(2010.01)*

(21) Application number: **10173622.1**

(22) Date of filing: **20.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **EPFL Ecole Polytechnique Fédérale de Lausanne**
**1015 Lausanne (CH)**

(72) Inventors:
• **Tomé, Phillip**
**2016 Cortaillod (CH)**

• **Botteron, Cyril**
**3238 Gals (CH)**
• **Farine, Pierre-André**
**2000 Neuchâtel (CH)**

(74) Representative: **Richard, François-Régis**
**e-Patent S.A.**
**Rue Saint-Honoré, 1**
**Case postale 2510**
**2001 Neuchâtel (CH)**

(54) **Location system and corresponding calibration method**

(57) The present invention relates to a location system, for locating at least one object within a predefined cell, comprising
at least first and second receivers (A, B, C, D), first and second transmitters respectively, including first and second internal clocks (rxA, rxB, rxC, rxD), the receivers, the transmitters respectively, having known locations, a transmitter, a receiver respectively, worn by the object and designed to communicate by means of signal exchanges with the receivers, the transmitters respectively, electronic circuits designed to compute a position related information of the object based on the signal exchanges, the system being characterized by the fact that it comprises at least two reference transmitters (1, 2, 3), two reference receivers respectively, arranged to carry out a calibration operation of the first and second internal clocks and having a relative distance (dtx1/tx2, dtx1/tx3, dtx2/tx3) with respect to each other which is, a priori, known.

Fig. 4

EP 2 420 855 A1

## Description

**Technical field**

The present invention relates to a location system, for locating at least one object within a predefined cell, comprising

at least first and second receivers, first and second transmitters respectively, including first and second internal clocks, these receivers, these transmitters respectively, having known locations,
a transmitter, a receiver respectively, worn by the object to locate and designed to communicate by means of signal exchanges, of the radio frequency (RF) type, with the receivers, the transmitters respectively,
electronic circuits designed to compute a position related information of the object based on the signal exchanges.

The invention further relates to a calibration method for calibrating the receiver or transmitter internal clocks.

**Background art**

Location systems may include, on the one side, long-range location systems, such as GPS, and, on the other hand, short-range systems involving measurements based on radio frequency signalling (Wi-Fi, ultra wide band signals (UWB), or other technologies (ultrasounds, etc..)).
In both types of systems, accurate knowledge of time is of critical importance in order to enable a precise calculation of signal travelling times between different entities of the systems to compute object positions.
As far as long-range systems are concerned, they typically comprise a constellation of transmitters having known positions and transmitting signals to a receiver whose position is to be assessed. Each transmitter has an internal clock which is synchronized with a master clock the position of which is accurately known. Specific calibration methods are provided in order to avoid time drifting of the transmitter internal clocks.
As far as short-range systems are concerned, they typically aim at locating an object carrying a transmitter within a predefined geometrical cell, eventually indoors. For that purpose, several receivers are distributed within the cell at precisely known locations. However, the receivers have internal clocks which need to be calibrated and which may be subject to time drifting, which may lead to large errors in the determination of tracked object positions.
Calibration methods for location systems are already known from prior art, for implementing both frequency and phase synchronizations.
For instance, patent US 6,882,315 B2 gathers a description of several known location systems and the corresponding calibration methods, with their corresponding drawbacks. In order to improve the exposed drawbacks, this patent proposes an object location system carrying out calculations based on times of arrival (TOA) of signals. The disclosed system comprises receivers located at know positions and synchronized with a common clock source as well as a reference transmitter also having a known location and arranged to transmit a timing reference signal. This timing reference signal allows a precise determination of TOA of signals transmitted by a tagged object, i.e. an object to be tracked and bearing a transmitter, by determination of the time offset between the receivers.
However, such a solution is heavy in terms of hardware to be installed and in terms of installation complexity. Indeed, the receivers should preferably be connected to the common clock source by means of cables and a great care has to be taken to ensure that the position of the reference transmitter is accurately known, else large errors may result in the measurements.
Another drawback of this system resides in the fact that, in case the configuration of the monitored region would have to be changed in a substantial manner, i.e. for instance a receiver would change from a line of sight (LOS) condition to a non line of sight (NLOS) condition with respect to the reference transmitter, the system would have to be re-installed then, with the same requirement of great care.
An alternate solution is presented in WO 2007/122394 A1 in which a calibration data is derived from a location signal based on both time difference of arrival (TDOA) and angle of arrival (AOA) of the location signal. Thus, there is no need to know the position of the transmitter sending the signal from which the calibration data is extracted. However, more antennas are required than in other location systems and the orientation of these antennas is critical in the system installation phase, requiring a great care. Furthermore, the corresponding method implies a large initial statistical computation to determine the offsets of the receiver internal clocks, in order to avoid a propagation of a possible initial calculation error in the later location determinations.

**Disclosure of the invention**

A main purpose of the present invention is to provide an accurate location system requiring few hardware components as well as less care in its installation with respect to known systems, making it particularly flexible and thus well suited for temporary needs, for instance, even in the case of large scale deployable systems.

For that purpose, the present invention relates to a location system as stated above, characterized by the fact that it comprises at least two reference transmitters, two reference receivers respectively, arranged to carry out a calibration operation of the first and second internal clocks and having a relative distance with respect to each other which is, a priori, known, preferably predefined by construction for instance.

This predefined relative distance may advantageously be constant or, alternately, be adjustable.

As known in the state of the art, the time offset of the receivers (or transmitters, in a GPS type system) can be determined on the basis of measurements the results of which are computed in a system of equations to be solved. Thus, some systems of the prior art, as previously mentioned, use a reference transmitter having a known position to change an under-determined system of equations into a determined system of equations to be solved, with the corresponding stated drawbacks. A main idea underlying the present invention is to use reference transmitters (or receivers) of unknown positions which, as such, do not help to solve the corresponding system of equations as far as the number of unknowns is increased. However, the fact that the relative distance between the reference transmitters (or receivers) is known allows a decrease of the number of unknowns in the system of equations which may thus become determined under particular conditions.

The system of the present invention may further comprise at least a third receiver, a third transmitter respectively, and be arranged to enable a location determination of the object in at least two dimensions.

According to a preferred embodiment of the present invention, the location system may comprise at least four receivers, four transmitters respectively, to enable a location determination of the object in at least three dimensions, as well as at least a third reference transmitter, a third reference receiver respectively, having relative distances with respect to the other two reference transmitters, the other two reference receivers respectively, which are predefined by construction.

The electronic circuits of the location system may be designed so as to carry out the calibration operation by application of an analytical calculation method, for instance based on the method of least squares.

The signals generated in the location system may advantageously be in the ultra wide band (UWB) range.

The present invention also relates to a calibration method for a location system, for locating at least one object within a predefined cell, comprising

at least first and second receivers, first and second transmitters respectively, including first and second internal clocks, the receivers, the transmitters respectively, having known locations,
a transmitter, a receiver respectively, worn by the object and designed to communicate by means of signal exchanges with the receivers, with the transmitters respectively,
electronic circuits designed to compute a position related information of the object based on the signal exchanges,
at least two reference transmitters, two reference receivers respectively,

the method comprising the steps consisting in:

a) arranging the reference transmitters, the reference receivers respectively, within the cell so that they have a predefined relative distance with respect to each other,
b) carrying out signal exchanges between the first and second receivers and each of the reference transmitters, between the first and second transmitters and each of the reference receivers respectively,
c) programming the electronic circuits so that they compute the signals as received by the first and second receivers, by the reference receivers respectively, by means of an analytical computation method, to carry out a calibration of the first and second internal clocks.

When the location system is arranged to carry out three dimension location measurements, the latter comprising at least four receivers, at least four transmitters respectively, each of which comprises an internal clock, the calibration method may further comprise the steps consisting in:

a) arranging at least a third reference transmitter, at least a third reference receiver respectively, within the cell and at predefined relative distances with respect to the other two reference transmitters, with respect to the other two reference receivers respectively,
b) carrying out signal exchanges between the receivers and each of the reference transmitters, between the transmitters and each of the reference receivers respectively,
c) programming the electronic circuits so that they compute the signals as received by the receivers, by the reference receivers respectively, by means of an analytical computation method, to carry out a calibration of the internal clocks.

Depending on the number of transmitters and receivers, the configuration of the location system may correspond to an under-determined system of equations. In such cases, one or more of the following assumptions may be made when carrying out step c):

i) one of the receiver internal clock, respectively of the transmitter internal clock, is considered to be a master clock,
ii) at least two of the reference transmitters, of the reference receivers respectively, are synchronized,
iii) at least two of the reference transmitters are located within a given known plane such that they have one coordinate in common (e.g. a known height), this coordinate possibly being known.

According to a preferred embodiment of the calibration method according to the invention, computation in step c) involves times of arrival (TOA) of signals. However, it may further involve AOA or strength of arrival (SOA) of the signals in order to provide more robustness or use less than four receivers.

**Brief description of the drawings**

Other characteristics and advantages of the present invention will become more clearly apparent on reading the following detailed description of exemplary embodiments, given with reference to the appended drawings that are provided by way of non-limiting examples, and in which:
FIG. 1 is a general schematic diagram of an illustrative example of a location system structure;
FIG. 2 is a detailed schematic diagram of a location system according to the prior art;
FIG. 3 is a schematic diagram of a location system corresponding to a first exemplary embodiment of the invention;
FIG. 4 is a schematic diagram of a location system according to a second exemplary embodiment of the present invention, and
FIG. 5a and 5b are two parts of an equation, to be adjoined to read the complete equation, corresponding to the location system of FIG. 4.

**Mode(s) for carrying out the invention**

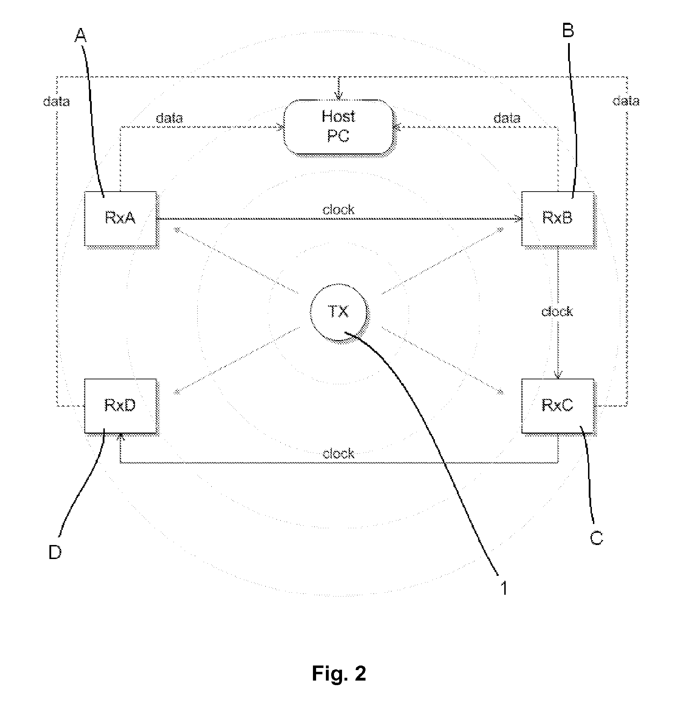

In the following description, the monitoring of an object having a tag will be described, the tag having the function of a transmitter and, as a consequence, receivers are provided in a monitored region to carry out the position determination of the object. However, it should be noted here that the location system of the present invention can also be reversed, i.e. the object could carry a receiver while transmitters would be placed at fixed locations, without going beyond the scope of the invention. The same remark applies similarly to the calibration method according to the invention.

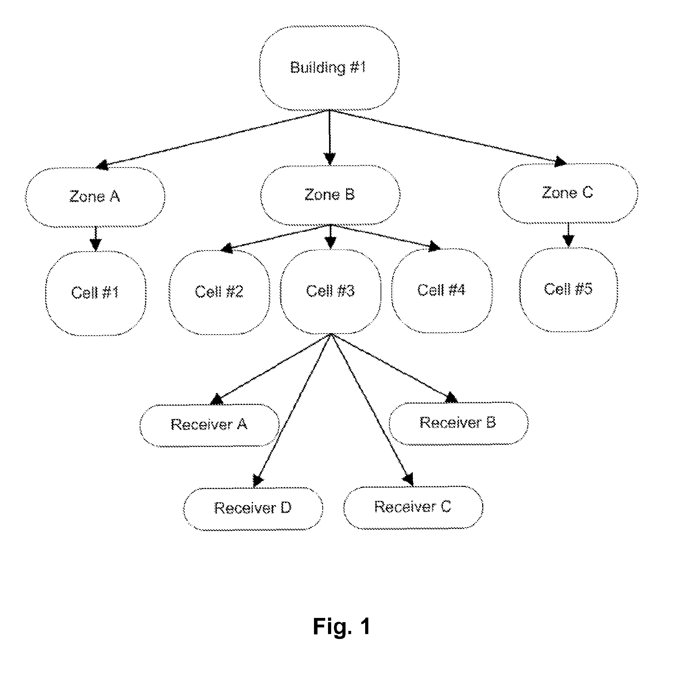

FIG. 1 shows a general schematic diagram of an illustrative example of a location system structure.
The diagram of FIG. 1 illustrates how a hierarchical topology can be defined to describe the installation of a location system.
On the top level, a building is defined which comprises several zones, each of which comprises one or several cells. The location system may comprise several buildings without going beyond the scope of the present invention. In alternative, the location system according to the invention may also be installed outdoors.
Each cell comprises a plurality of receivers arranged to monitor the position of an object carrying a transmitter within the cell as known from the prior art.
This situation is depicted in more detail on FIG. 2, where four receivers A, B, C and D are provided to monitor the position of an object carrying a transmitter 1.
In the general case, the transmitter is placed arbitrarily within the cell.
Assuming that there is an idealized master clock and that each receiver has its own local internal clock, even though one of these internal clocks may play the role of the master clock, for instance that of the first receiver rxA, distributing its clock to the other receiver clocks rxB, rxC and rxD, the location system may be associated to the following system of equations:
$$
\begin{cases}
\delta t^{rx_A} = \dfrac{\left\| \mathbf{X}^{rx_A} - \mathbf{X}_{tx_1} \right\|}{c} + t_{tx_1} - \breve{t}^{rx_A}_{tx_1} \\[2.5em]
\delta t^{rx_B} = \dfrac{\left\| \mathbf{X}^{rx_B} - \mathbf{X}_{tx_1} \right\|}{c} + t_{tx_1} - \breve{t}^{rx_B}_{tx_1} \\[2.5em]
\delta t^{rx_C} = \dfrac{\left\| \mathbf{X}^{rx_C} - \mathbf{X}_{tx_1} \right\|}{c} + t_{tx_1} - \breve{t}^{rx_C}_{tx_1} \qquad \text{(Equation 1)} \\[2.5em]
\delta t^{rx_D} = \dfrac{\left\| \mathbf{X}^{rx_D} - \mathbf{X}_{tx_1} \right\|}{c} + t_{tx_1} - \breve{t}^{rx_D}_{tx_1}
\end{cases}
$$

Where each of $\delta t^{rx_A}$, $\delta t^{rx_B}$, $\delta t^{rx_C}$ and $\delta t^{rx_D}$ is the delay between the internal clock of a receiver and the idealized master clock. Indeed, even though receiver A is supplying a master clock to all the other receivers, there are still delays to consider in these receivers caused by the length of the cables carrying the clock signal and due to clock signal buffering/amplification electronics.

Furthermore, $\mathbf{X}^{rx_A}$, $\mathbf{X}^{rx_B}$, $\mathbf{X}^{rx_C}$ and $\mathbf{X}^{rx_D}$ are the known position coordinates of receivers A, B, C and D respectively and

$$
\breve{t}^{Rx_A}_{Tx_1} \quad ,
$$

$$
\breve{t}^{Rx_B}_{Tx_1} \quad ,
$$

$$
\breve{t}^{Rx_C}_{Tx_1}
$$

$$
\breve{t}^{Rx_D}_{Tx_1}
$$

are the times of arrival (TOA) of the signal emitted by transmitter 1 ($tx_1$) measured at receivers A, B, C and D respectively using their local clock (hence the symbol over the $t$ letter).

On the other hand, $\mathbf{X}_{tx1}$ are the unknown absolute position coordinates of transmitter 1 and $\mathbf{t}_{tx1}$ is the unknown signal transmission time expressed on the idealized master clock. $C$ is the constant speed of light to convert from time to distance and vice-versa.

For the system of equations in Equation 1, there are 4 equations for 8 unknowns ( $\delta t^{rx_A}$, $\delta t^{rx_B}$, $\delta t^{rx_C}$, $\delta t^{rx_D}$, $\mathbf{t}_{tx1}$ and $\mathbf{X}_{tx1} = [x_{tx1}\ y_{tx1}\ z_{tx1}]^T$ ), which makes it clearly an under-determined system (i.e. more unknowns than equations).

Equation 1 can be further simplified if one considers the idealized master clock to be identical to the clock of receiver 1 which is acting as master clock for the remaining slave receivers. With this assumption, Equation 1 gets simplified as follows:

$$\begin{cases} 0 = \dfrac{\left\| \mathbf{X}^{rx_A} - \mathbf{X}_{tx_1} \right\|}{c} + t_{tx_1} - t_{tx_1}^{rx_A} \\[3mm] \delta t^{rx_B} = \dfrac{\left\| \mathbf{X}^{rx_B} - \mathbf{X}_{tx_1} \right\|}{c} + t_{tx_1} - \breve{t}_{tx_1}^{rx_B} \\[3mm] \delta t^{rx_C} = \dfrac{\left\| \mathbf{X}^{rx_C} - \mathbf{X}_{tx_1} \right\|}{c} + t_{tx_1} - \breve{t}_{tx_1}^{rx_C} \\[3mm] \delta t^{rx_D} = \dfrac{\left\| \mathbf{X}^{rx_D} - \mathbf{X}_{tx_1} \right\|}{c} + t_{tx_1} - \breve{t}_{tx_1}^{rx_D} \end{cases} \qquad \text{(Equation 2)}$$

where the time offset $\delta t^{rx_A}$ is now zero. However, the system is still under-determined because there are only 4 equations for 7 unknowns, one less than before because $\delta t^{rx_A}$ has disappeared from the set of equations.

We may note, at this stage, that one solution of the prior art discussed previously consists in positioning the transmitter in a known absolute position within the cell. Thus, by doing this, the unknowns are decreased from 7 to 4 and the system of equations may be solved. However, this solution presents some drawbacks already discussed and the purpose of the present invention is to propose an alternate way for the determination of the receiver internal clock offsets.

So now, assume a second transmitter 2 ($_{tx2}$) is also placed within the cell limits at an unknown absolute position, but at a known distance from the previous transmitter 1 ($tx_1$), i.e. the distance between $tx_1$ and $tx_2$ is known and equal to $d_{tx1/tx2}$.

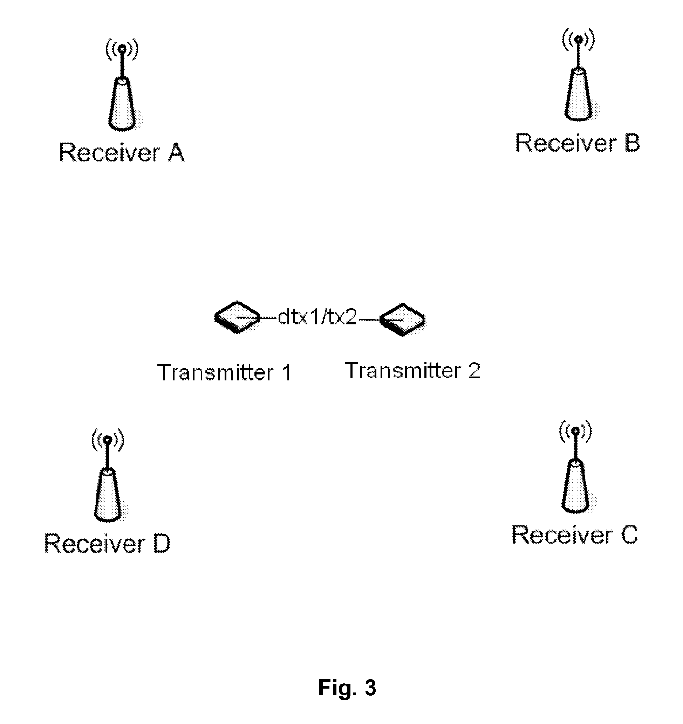

This situation is illustrated on FIG. 3, where transmitters 1 and 2 are located at arbitrary locations within the cell, their relative distance being however predetermined by construction.

The extra set of equations that results from considering the added transmitter is:

$$\begin{cases} 0 = \dfrac{\left\| \mathbf{X}^{rx_A} - \mathbf{X}_{tx_2} \right\|}{c} + t_{tx_2} - t_{tx_2}^{rx_A} \\[3mm] \delta t^{rx_B} = \dfrac{\left\| \mathbf{X}^{rx_B} - \mathbf{X}_{tx_2} \right\|}{c} + t_{tx_2} - \breve{t}_{tx_2}^{rx_B} \\[3mm] \delta t^{rx_C} = \dfrac{\left\| \mathbf{X}^{rx_C} - \mathbf{X}_{tx_2} \right\|}{c} + t_{tx_2} - \breve{t}_{tx_2}^{rx_C} \\[3mm] \delta t^{rx_D} = \dfrac{\left\| \mathbf{X}^{rx_D} - \mathbf{X}_{tx_2} \right\|}{c} + t_{tx_2} - \breve{t}_{tx_2}^{rx_D} \qquad \text{(Equation 3)} \\[3mm] d_{tx_1/tx_2} = \left\| \mathbf{X}_{tx_1} - \mathbf{X}_{tx_2} \right\| \end{cases}$$

We have now 5 new equations, which added to the previous 4, make a total of 9 equations. However, at the same time, we have added to our system 4 new unknowns, specifically the time of transmission $(t_{tx2})$ and the absolute position coordinates ($\mathbf{X}_{tx2} = [x_{tx2}\,y_{tx2}\,z_{tx2}]^T$) of transmitter 2, totalizing 11 unknowns. The system is still under-determined.

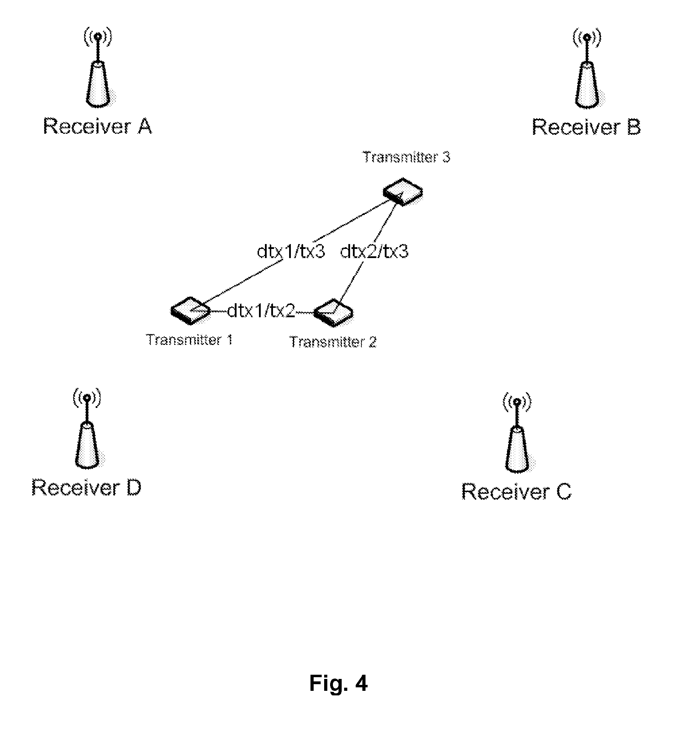

Repeating the procedure of placing another transmitter 3 $(tx_3)$ at a known distance to the previous two other transmitters, i.e. the distance to transmitter 1 is known ($d_{tx1/tx3}$) as well as the distance to transmitter 2 ($d_{tx2/tx3}$), leads to the situation illustrated on FIG. 4.

An extra set of equations can thus be written:

$$
\begin{cases}
0 = \dfrac{\left\| \mathbf{X}^{rx_A} - \mathbf{X}_{tx_3} \right\|}{c} + t_{tx_3} - t^{rx_A}_{tx_3} \\[2ex]
\delta t^{rx_B} = \dfrac{\left\| \mathbf{X}^{rx_B} - \mathbf{X}_{tx_3} \right\|}{c} + t_{tx_3} - \breve{t}^{rx_B}_{tx_3} \\[2ex]
\delta t^{rx_C} = \dfrac{\left\| \mathbf{X}^{rx_C} - \mathbf{X}_{tx_3} \right\|}{c} + t_{tx_3} - \breve{t}^{rx_C}_{tx_3} \\[2ex]
\delta t^{rx_D} = \dfrac{\left\| \mathbf{X}^{rx_D} - \mathbf{X}_{tx_3} \right\|}{c} + t_{tx_3} - \breve{t}^{rx_D}_{tx_3} \quad \text{(Equation 4)} \\[2ex]
d_{tx_1/tx_3} = \left\| \mathbf{X}_{tx_1} - \mathbf{X}_{tx_3} \right\| \\[2ex]
d_{tx_2/tx_3} = \left\| \mathbf{X}_{tx_2} - \mathbf{X}_{tx_3} \right\|
\end{cases}
$$

As in the previous step, by adding an extra transmitter we also added the same number of 4 unknowns to the system, which are the time of transmission of transmitter 3 $(t_{tx3})$ and its absolute position coordinates ($\mathbf{X}_{tx3} = [x_{tx3}\,y_{tx3}\,z_{tx3}]^T$). However, due to the position constraints between transmitters, we have added a total of 6 new equations. We have now a total of 15 unknowns and also 15 equations, which is no longer an under-determined system and can be mathematically solved.

So, to summarize Equation 5 presents the full set of non-linear equations and Table 1 the unknowns to be determined, as well as the known inputs.

$$
\begin{cases}
0 = \dfrac{\left\| \mathbf{X}^{rx_A} - \mathbf{X}_{tx_1} \right\|}{c} + t_{tx_1} - t_{tx_1}^{rx_A} \\[2em]
\delta t^{rx_B} = \dfrac{\left\| \mathbf{X}^{rx_B} - \mathbf{X}_{tx_1} \right\|}{c} + t_{tx_1} - \breve{t}_{tx_1}^{rx_B} \\[2em]
\delta t^{rx_C} = \dfrac{\left\| \mathbf{X}^{rx_C} - \mathbf{X}_{tx_1} \right\|}{c} + t_{tx_1} - \breve{t}_{tx_1}^{rx_C} \\[2em]
\delta t^{rx_D} = \dfrac{\left\| \mathbf{X}^{rx_D} - \mathbf{X}_{tx_1} \right\|}{c} + t_{tx_1} - \breve{t}_{tx_1}^{rx_D} \\[3em]
0 = \dfrac{\left\| \mathbf{X}^{rx_A} - \mathbf{X}_{tx_2} \right\|}{c} + t_{tx_2} - t_{tx_2}^{rx_A} \\[2em]
\delta t^{rx_B} = \dfrac{\left\| \mathbf{X}^{rx_B} - \mathbf{X}_{tx_2} \right\|}{c} + t_{tx_2} - \breve{t}_{tx_2}^{rx_B} \\[2em]
\delta t^{rx_C} = \dfrac{\left\| \mathbf{X}^{rx_C} - \mathbf{X}_{tx_2} \right\|}{c} + t_{tx_2} - \breve{t}_{tx_2}^{rx_C} \\[2em]
\delta t^{rx_D} = \dfrac{\left\| \mathbf{X}^{rx_D} - \mathbf{X}_{tx_2} \right\|}{c} + t_{tx_2} - \breve{t}_{tx_2}^{rx_D} \\[3em]
0 = \dfrac{\left\| \mathbf{X}^{rx_A} - \mathbf{X}_{tx_2} \right\|}{c} + t_{tx_3} - t_{tx_3}^{rx_A} \\[2em]
\delta t^{rx_B} = \dfrac{\left\| \mathbf{X}^{rx_B} - \mathbf{X}_{tx_3} \right\|}{c} + t_{tx_3} - \breve{t}_{tx_3}^{rx_B} \\[2em]
\delta t^{rx_C} = \dfrac{\left\| \mathbf{X}^{rx_C} - \mathbf{X}_{tx_3} \right\|}{c} + t_{tx_3} - \breve{t}_{tx_3}^{rx_C} \\[2em]
\delta t^{rx_D} = \dfrac{\left\| \mathbf{X}^{rx_D} - \mathbf{X}_{tx_3} \right\|}{c} + t_{tx_3} - \breve{t}_{tx_3}^{rx_D} \\[3em]
d_{tx_1/tx_2} = \left\| \mathbf{X}_{tx_1} - \mathbf{X}_{tx_2} \right\| \\[1em]
d_{tx_1/tx_3} = \left\| \mathbf{X}_{tx_1} - \mathbf{X}_{tx_3} \right\| \\[1em]
d_{tx_2/tx_3} = \left\| \mathbf{X}_{tx_2} - \mathbf{X}_{tx_3} \right\|
\end{cases}
\quad \text{(Equation 5)}
$$

Table 1 follows:

| | | | |
|---|---|---|---|
| Unknowns | $\delta t \rho^{\xi}$ | | Clock offset of receiver B |
| | $\delta t \rho^{\xi X}$ | | Clock offset of receiver C |
| | $\delta t \rho^{\xi \Delta}$ | | Clock offset of receiver D |
| | $\mathbf{X}_{tx_1} = \begin{bmatrix} x_{tx_1} & y_{tx_1} & z_{tx_1} \end{bmatrix}^T$ | | Transmitter 1 absolute position coordinates |
| | $\mathbf{X}_{tx_2} = \begin{bmatrix} x_{tx_2} & y_{tx_2} & z_{tx_2} \end{bmatrix}^T$ | | Transmitter 2 absolute position coordinates |
| | $\mathbf{X}_{tx_3} = \begin{bmatrix} x_{tx_3} & y_{tx_3} & z_{tx_3} \end{bmatrix}^T$ | | Transmitter 3 absolute position coordinates |
| | $t_{tx1}$ | | Transmitter 1 signal transmission time |
| | | | Transmitter 2 signal transmission time |
| | $t_{tx3}$ | | Transmitter 3 signal transmission time |
| Measurements / Known parameters | $\breve{t}_{tx_1}^{rx_A}$ | | Measured reception time at receiver A of signal transmitted by transmitter 1 |
| | $\breve{t}_{tx_1}^{rx_B}$ | | Measured reception time at receiver B of signal transmitted by transmitter 1 |
| | $\breve{t}_{tx_1}^{rx_C}$ | | Measured reception time at receiver C of signal transmitted by transmitter 1 |
| | $\breve{t}_{tx_1}^{rx_D}$ | | Measured reception time at receiver D of signal transmitted by transmitter 1 |
| | $\breve{t}_{tx_2}^{rx_A}$ | | Measured reception time at receiver A of signal transmitted by transmitter 2 |
| | $\breve{t}_{tx_2}^{rx_B}$ | | Measured reception time at receiver B of signal transmitted by transmitter 2 |
| | $\breve{t}_{tx_2}^{rx_C}$ | | Measured reception time at receiver C of signal transmitted by transmitter 2 |
| | $\breve{t}_{tx_2}^{rx_D}$ | | Measured reception time at receiver D of signal transmitted by transmitter 2 |

(continued)

| | | |
|---|---|---|
| | $\breve{t}_{tx_3}^{rx_A}$ | Measured reception time at receiver A of signal transmitted by transmitter 3 |
| | $\breve{t}_{tx_3}^{rx_B}$ | Measured reception time at receiver B of signal transmitted by transmitter 3 |
| | $\breve{t}_{tx_3}^{rx_C}$ | Measured reception time at receiver C of signal transmitted by transmitter 3 |
| | $\breve{t}_{tx_3}^{rx_D}$ | Measured reception time at receiver D of signal transmitted by transmitter 3 |
| | $\mathbf{X}^{rx_A} = \begin{bmatrix} x^{rx_A} & y^{rx_A} & z^{rx_A} \end{bmatrix}^T$ | Receiver A absolute position coordinates |
| | $\mathbf{X}^{rx_B} = \begin{bmatrix} x^{rx_B} & y^{rx_B} & z^{rx_B} \end{bmatrix}^T$ | Receiver B absolute position coordinates |
| | $\mathbf{X}^{rx_C} = \begin{bmatrix} x^{rx_C} & y^{rx_C} & z^{rx_C} \end{bmatrix}^T$ | Receiver C absolute position coordinates |
| | $\mathbf{X}^{rx_D} = \begin{bmatrix} x^{rx_D} & y^{rx_D} & z^{rx_D} \end{bmatrix}^T$ | Receiver D absolute position coordinates |
| | $d_{tx_1/tx_2}$ | Known distance between transmitters 1 and 2 |
| | $d_{tx_1/tx_3}$ | Known distance between transmitters 1 and 3 |
| | $d_{tx_2/tx_3}$ | Known distance between transmitters 2 and 3 |
| | $c$ | Speed of light |

Through the method of least squares (LSQ), for instance, this system of non-linear equations can be solved as more measurements are received (i.e. by extending the calibration procedure to several minutes) to improve the estimation of the unknowns.

However, to use LSQ, the equations need to be first linearized around a first guess of the solution. The LSQ then estimates the adjustments to be introduced to this solution until it minimizes the sum of the squared difference between the measurements and predicted measurements using the estimated solution.

The first guess for the clock offsets of receivers B, C and D can be zero. The first guess for the position of transmitter 1 can be the center of the cell. For the remaining transmitters, a first guess of their positions can be made by respecting the known relative distances between them. Finally, the first guess for the time of transmission for each transmitter can be obtained from the measured time of reception at a certain receiver minus the time of flight of the signal, considering the direct geometric distance between the receivers and the assumed positions of the transmitters.

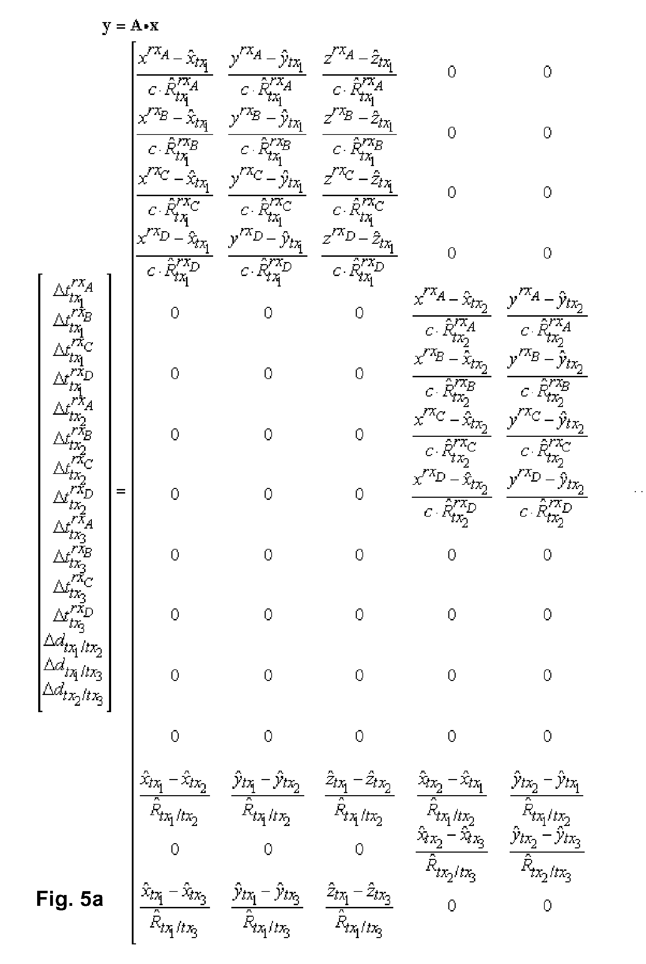

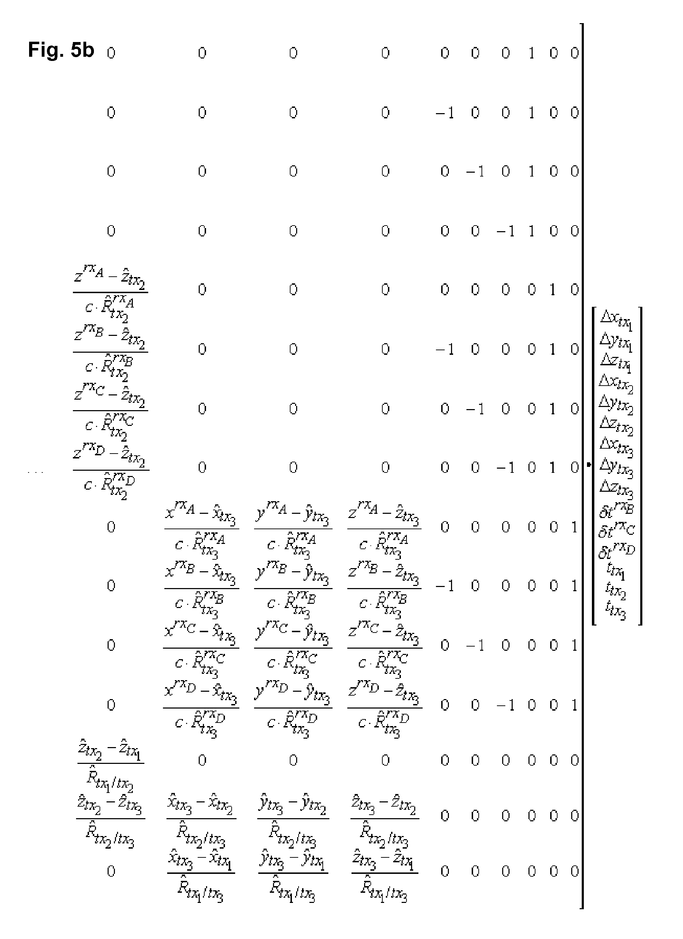

FIG. 5a and 5b, to be read once they are adjoined, depict the linearized set of equation in matrix format, where

$$R_a^b = R_{ab} = \sqrt{(x_a - x_b)^2 + (y_a - y_b)^2 + (z_a - z_b)^2} \ .$$

The procedure then may go on as follows:

For each new TOA measurement received, $\Delta t_{tx_?}^{rx_?}$ are computed from the difference between the new TOA measurements

$$(\, \breve{t}_{tx_?}^{rx_?} \,)$$

and its prediction ( $\hat{t}_{tx_?}^{rx_?} = \dfrac{\left\| \mathbf{X}^{rx_?} - \hat{\mathbf{X}}_{tx_?} \right\|}{c} + \hat{t}_{tx_?} - \hat{\delta} t^{rx_?}$ ). That is

$$\Delta t_{tx_?}^{rx_?} = \breve{t}_{tx_?}^{rx_?} - \hat{t}_{tx_?}^{rx_?} \ .$$

Similarly, $\Delta d_{tx?/tx?} = d_{tx?/tx2} - \hat{d}_{tx?/tx?}$, where $\hat{d}_{tx?/tx?} = \| \hat{\mathbf{X}}_{tx?} - \mathbf{X}_{tx?} \|$.

After applying the LSQ formula, the new position estimates for transmitters 1, 2 and 3 at iteration $K$ are obtained a s $\hat{\mathbf{X}}_{tx?K} = [\hat{x}_{tx?K} \ \hat{y}_{tx?K} \ \hat{z}_{tx?K}]^T = \hat{\mathbf{X}}_{tx?K-1} + \Delta \hat{\mathbf{X}}_{tx?K}$, while the receivers' clock offsets $\hat{\delta} t^{rx?}$ and transmission times $\hat{t}_{tx?}$ are obtained directly.

Then, the LSQ iteration finishes when there are no TOA measurements or when a certain stopping criterion is reached.

It appears from these explanations that the transmitters having known relative positions between each other play the role of reference transmitters for the purpose of calibrating the location system.

Further, it is important to note here that the explanations which precede relate to an exemplary embodiment and that the scope of the present invention is not limited to this specific case.

Indeed, these explanations relate to the case where 3D location is to be carried out. However, if the one skilled in the art needs only to carry out a 2D location of objects, for instance, the situation of FIG. 3 would fulfil the required conditions to calibrate the internal clocks of the four receivers A, B, C and D. Indeed, in the case of 2D location, the unknowns are decreased by one per transmitter (its z coordinate) and thus, with the location system comprising four receivers and two transmitters, we have 9 unknowns for 9 equations, corresponding to a determined system of equations.

More generally, the one skilled in the art may consider the following explanations to determine what location system configuration may suit his needs.

Considering first a 2D location system with M receivers and N reference transmitters (M and N being equal to or greater than one) within a predefined cell, we may have the following initial assumptions:

**[0073]** - The position of all receivers is known

**[0074]** - The positions of transmitters are not known.

Before deriving the time of flight (TOF) equation for the M receivers and N transmitters it would be more intuitive to start with the case of one transmitter and one receiver.

The equation for TOF for one receiver and one transmitter is:

$$TOF_r = (t_r' - \delta t_r) - t_t = \frac{1}{c} \left\| \vec{X}_r - \vec{x} \right\|$$

.

where $t_r'$ is the time of arrival which is measured by using receiver's local clock and is independent of time of trans-

mission, $\delta t_r$ is clock offset of receiver, $t_t$ is a time of transmission of the signal, C is propagation speed of the signal, $\vec{X}_r$ is position co-ordinate of the receiver in 2-Dimensional plane which is known, and $\vec{X}$ is position co-ordinate of transmitter in 2-Dimensional plane which is unknown.

From this equation we observe that the in the case of one receiver and one transmitter we have four unknowns 1) clock offset 2) time of transmission and 3) coordinate of transmitter (x, y).

Now we consider a two receivers and one transmitter case which gives one more equation for TOF while the number of unknowns will increase by one due to clock offset of the newly added receiver such that the total number of unknowns is five.

Now if we add one more transmitter, while keeping unchanged the number of receivers, we have four TOF equations and we add three unknowns (x and y co-ordinates for transmitter and time of transmission).

By generalizing this condition we see that for M receivers and N transmitters we have MN equations and we have M unknowns for the clock-offset of each receiver, N unknowns for the times of transmission and 2N unknowns for the positions of the transmitters.

The number of equations is thus MN while the number of unknowns is M+3N.

To be able to solve these equations we must have a number of equations equal or greater to the number of unknowns which imply that MN >= M+3N.

By considering the cases up to ten receivers and ten transmitters, the difference between the number of equations and the number of unknowns behaves as shown in the following table:

| MN-(M+3N) | | M (number of receivers) | | | | | | | | | |
|---|---|---|---|---|---|---|---|---|---|---|---|
| | | 1 | 2 | 3 | 4 | 5 | 6 | 7 | 8 | 9 | 10 |
| N (Number of transmitters) | 1 | -3 | -3 | -3 | -3 | -3 | -3 | -3 | -3 | -3 | -3 |
| | 2 | -5 | -4 | -3 | -2 | -1 | 0 | 1 | 2 | 3 | 4 |
| | 3 | -7 | -5 | -3 | -1 | 1 | 3 | 5 | 7 | 9 | 11 |
| | 4 | -9 | -6 | -3 | 0 | 3 | 6 | 9 | 12 | 15 | 18 |
| | 5 | -11 | -7 | -3 | 1 | 5 | 9 | 13 | 17 | 21 | 25 |
| | 6 | -13 | -8 | -3 | 2 | 7 | 12 | 17 | 22 | 27 | 32 |
| | 7 | -15 | -9 | -3 | 3 | 9 | 15 | 21 | 27 | 33 | 39 |
| | 8 | -17 | -10 | -3 | 4 | 11 | 18 | 25 | 32 | 39 | 46 |
| | 9 | -19 | -11 | -3 | 5 | 13 | 21 | 29 | 37 | 45 | 53 |
| | 10 | -21 | -12 | -3 | 6 | 15 | 24 | 33 | 42 | 51 | 60 |

In this table, negative numbers show that the number of unknowns is higher than number of equations. When the number of equations is one less than the number of unknowns, they can be solved by considering one clock of the receiver as master clock, for instance.

It is possible to find the receiver clock offsets (without any particular assumption) for the following location system configuration: 2 transmitters and at least 6 receivers, 3 transmitters and at least 5 receivers and 4 or more transmitters associated with 4 or more receivers.

Going further, we can consider that one of the receiver internal clock is master clock for all other receiver internal clocks.

This implies a decrease of the number of unknowns by 1 and the new condition to fulfil to have a determined system of equations is MN >= M+3N -1.

By considering the cases up to ten receivers and ten transmitters, the difference between the number of equations and the number of unknowns behaves as shown in the amended following table:

| MN-(M+3N-1) | M (number of receivers) | | | | | | | | | |
|---|---|---|---|---|---|---|---|---|---|---|
| | 1 | 2 | 3 | 4 | 5 | 6 | 7 | 8 | 9 | 10 |
| N (Number of transmitters) 1 | -2 | -2 | -2 | -2 | -2 | -2 | -2 | -2 | -2 | -2 |
| 2 | -4 | -3 | -2 | -1 | 0 | 1 | 2 | 3 | 4 | 5 |
| 3 | -6 | -4 | -2 | 0 | 2 | 4 | 6 | 8 | 10 | 12 |
| 4 | -8 | -5 | -2 | 1 | 4 | 7 | 10 | 13 | 16 | 19 |
| 5 | -10 | -6 | -2 | 2 | 6 | 10 | 14 | 18 | 22 | 26 |
| 6 | -12 | -7 | -2 | 3 | 8 | 13 | 18 | 23 | 28 | 33 |
| 7 | -14 | -8 | -2 | 4 | 10 | 16 | 22 | 28 | 34 | 40 |
| 8 | -16 | -9 | -2 | 5 | 12 | 19 | 26 | 33 | 40 | 47 |
| 9 | -18 | -10 | -2 | 6 | 14 | 22 | 30 | 38 | 46 | 54 |
| 10 | -20 | -11 | -2 | 7 | 16 | 25 | 34 | 43 | 52 | 61 |

It appears from this table that a minimum of 3 transmitters combined with 4 receivers leads to a determined set of equations.

Going still further, we may consider a second case scenario where we have N transmitters and where we know the position of each transmitter with respect to first transmitter. In other words we know the relative positions of all N-1 transmitters with respect to first transmitter.

In such a case, the number of unknowns is N+M+2, while the number of equations is still NM.

By considering the cases up to ten receivers and ten transmitters, the difference between the number of equations and the number of unknowns behaves as shown in the amended following table:

| MN-(M+N+2) | M (number of receivers) | | | | | | | | | |
|---|---|---|---|---|---|---|---|---|---|---|
| | 1 | 2 | 3 | 4 | 5 | 6 | 7 | 8 | 9 | 10 |
| N (Number of transmitters) 1 | -3 | -3 | -3 | -3 | -3 | -3 | -3 | -3 | -3 | -3 |
| 2 | -3 | -2 | -1 | 0 | 1 | 2 | 3 | 4 | 5 | 6 |
| 3 | -3 | -1 | 1 | 3 | 5 | 7 | 9 | 11 | 13 | 15 |
| 4 | -3 | 0 | 3 | 6 | 9 | 12 | 15 | 18 | 21 | 24 |
| 5 | -3 | 1 | 5 | 9 | 13 | 17 | 21 | 25 | 29 | 33 |
| 6 | -3 | 2 | 7 | 12 | 17 | 22 | 27 | 32 | 37 | 42 |
| 7 | -3 | 3 | 9 | 15 | 21 | 27 | 33 | 39 | 45 | 51 |
| 8 | -3 | 4 | 11 | 18 | 25 | 32 | 39 | 46 | 53 | 60 |
| 9 | -3 | 5 | 13 | 21 | 29 | 37 | 45 | 53 | 61 | 69 |
| 10 | -3 | 6 | 15 | 24 | 33 | 42 | 51 | 60 | 69 | 78 |

It appears from this table that a minimum of 3 transmitters combined with 3 receivers leads to a determined set of equations.

Another assumption that can be made or condition that can be carried out in the location system is that the time interval between the time of transmission of each transmitter with respect to that of a first transmitter is known. For instance, if first transmitter transmits at t0 then second transmitter will transmit at t0+t1, third transmitter at t0+t2 ....etc where t1, t2, t3 are known. Here, only the time of transmission of the first transmitter will be unknown which decreases the total number of unknowns by N-1.

In such a case, the number of unknowns is M+2N+1, while the number of equations is still NM.

By considering the cases up to ten receivers and ten transmitters, the difference between the number of equations and the number of unknowns behaves as shown in the amended following table:

| MN- (M+2N+1) | | M (number of receivers) | | | | | | | | | |
|---|---|---|---|---|---|---|---|---|---|---|---|
| | | 1 | 2 | 3 | 4 | 5 | 6 | 7 | 8 | 9 | 10 |
| N (Number of transmitters) | 1 | -3 | -3 | -3 | -3 | -3 | -3 | -3 | -3 | -3 | -3 |
| | 2 | -4 | -3 | -2 | -1 | 0 | 1 | 2 | 3 | 4 | 5 |
| | 3 | -5 | -3 | -1 | 1 | 3 | 5 | 7 | 9 | 11 | 13 |
| | 4 | -6 | -3 | 0 | 3 | 6 | 9 | 12 | 15 | 18 | 21 |
| | 5 | -7 | -3 | 1 | 5 | 9 | 13 | 17 | 21 | 25 | 29 |
| | 6 | -8 | -3 | 2 | 7 | 12 | 17 | 22 | 27 | 32 | 37 |
| | 7 | -9 | -3 | 3 | 9 | 15 | 21 | 27 | 33 | 39 | 45 |
| | 8 | -10 | -3 | 4 | 11 | 18 | 25 | 32 | 39 | 46 | 53 |
| | 9 | -11 | -3 | 5 | 13 | 21 | 29 | 37 | 45 | 53 | 61 |
| | 10 | -12 | -3 | 6 | 15 | 24 | 33 | 42 | 51 | 60 | 69 |

It appears from this table that, in this case also, a minimum of 3 transmitters combined with 4 receivers leads to a determined set of equations.

If considering now a three dimension case, the entire location system is placed in a three dimensional co-ordinate system. This scenario is an extension of the preceding two dimensional case by introducing the third co-ordinate for the receivers and transmitters which in turn adds one more unknown (the z co-ordinate) for each transmitter (the positions of receivers being already known).

In such a situation, the number of unknowns is M+4N, while the number of equations is still NM.

By considering again the cases up to ten receivers and ten transmitters, the difference between the number of equations and the number of unknowns behaves as shown in the amended following table:

| MN- (M+2N+1) | | M (number of receivers) | | | | | | | | | |
|---|---|---|---|---|---|---|---|---|---|---|---|
| | | 1 | 2 | 3 | 4 | 5 | 6 | 7 | 8 | 9 | 10 |
| N (Number of transmitters) | 1 | -4 | -4 | -4 | -4 | -4 | -4 | -4 | -4 | -4 | -4 |
| | 2 | -7 | -6 | -5 | -4 | -3 | -2 | -1 | 0 | 1 | 2 |
| | 3 | -10 | -8 | -6 | -4 | -2 | 0 | 2 | 4 | 6 | 8 |
| | 4 | -13 | -10 | -7 | -4 | -1 | 2 | 5 | 8 | 11 | 14 |
| | 5 | -16 | -12 | -8 | -4 | 0 | 4 | 8 | 12 | 16 | 20 |
| | 6 | -19 | -14 | -9 | -4 | 1 | 6 | 11 | 16 | 21 | 26 |
| | 7 | -22 | -16 | -10 | -4 | 2 | 8 | 14 | 20 | 26 | 32 |
| | 8 | -25 | -18 | -11 | -4 | 3 | 10 | 17 | 24 | 31 | 38 |
| | 9 | -28 | -20 | -12 | -4 | 4 | 12 | 20 | 28 | 36 | 44 |
| | 10 | -31 | -22 | -13 | -4 | 5 | 14 | 23 | 32 | 41 | 50 |

It appears from this table that a minimum of 3 transmitters combined with 6 receivers leads to a determined set of equations.

We can further note that it appeared from the detailed description of the figures that a system of 3 transmitters combined with 4 receivers could be solved provided we would consider one receiver internal clock as a master clock and all relative distances between transmitters known. Based on the latter explanations regarding the different possible configurations, in particular in the 3D case, we can deduce that 3 transmitters combined with 3 receivers would lead to a determined system if we know the relative position - in the location system reference frame - of each transmitter with respect to one arbitrarily chosen transmitter (the absolute position of which being unknown). Such a solution would thus require less hardware but would imply more care in the installation stage regarding the absolute orientation of the set of transmitters.

However, if the relative positions of the transmitters with respect to each other are known in the transmitter local reference frame, their relative distances can be deduced and we have again the situation depicted by Equation 5, without the requirement of special care in the installation stage.

The above description corresponds to a preferred embodiment of the invention described by way of non-limiting example. In particular, the given exemplary numbers of transmitters and receivers are non-limiting.

Further and by way of example, a person skilled in the art will encounter no particular problem in building a set of transmitters (or receivers in the reversed case scenario) such that their relative distances or positions are known, according to his specific needs, without departing from the scope of the present invention. Indeed, one could provide any kind of support designed so as to receive a plurality of transmitters at known relative distances with respect to each other. Preferably, such a support should be portable so as to allow an easy transportation.

On the one hand, the location system according to the present invention, and the corresponding calibration method, would advantageously suit temporary needs of such a location system, for instance to monitor the positions of objects or persons in a temporary fair or exhibition. In such cases, the principle of self-calibration according to the invention could be easily repeated, for instance, each time the configuration of the cell would be changed (such like walls which could be displaced within the cell, changing the state of at least one transmitter from LOS to NLOS). On the other hand, the calibration transmitter set could remain in place on a permanent basis in order to perform a periodic calibration and avoid any drifting of the clocks over time, without going beyond the scope of the present invention.

**Claims**

1. Location system, for locating at least one object within a predefined cell, comprising

   at least first and second receivers (A, B, C, D), first and second transmitters respectively, including first and second internal clocks (rxA, rxB, rxC, rxD), said receivers, said transmitters respectively, having known locations, a transmitter, a receiver respectively, worn by said object and designed to communicate by means of signal exchanges with said receivers, said transmitters respectively,
   electronic circuits designed to compute a position related information of said object based on said signal exchanges,
   **characterized in that** the system comprises at least two reference transmitters (1, 2), two reference receivers respectively, arranged to carry out a calibration operation of said first and second internal clocks (rxA, rxB, rxC, rxD) and having a relative distance (dtx1/tx2) with respect to each other which is, a priori, known.

2. Location system according to claim 1, **characterized in that** said relative distance (dtx1/tx2) is constant.

3. Location system according to claim 1 or 2, **characterized in that** it comprises at least a third receiver (A, B, C, D), a third transmitter respectively, and is arranged to enable a location determination of said object in at least two dimensions.

4. Location system according to claim 3, **characterized in that** it comprises at least four receivers (A, B, C, D), four transmitters respectively, to enable a location determination of said object in at least three dimensions, as well as at least a third reference transmitter (3), a third reference receiver respectively, having relative distances (dtx1/tx3, dtx2/tx3) with respect to said other two reference transmitters (1, 2), said other two reference receivers respectively, which are, a priori, known.

5. Location system according to any of the preceding claims, **characterized in that** said electronic circuits are designed so as to carry out said calibration operation by application of the method of least squares or another estimation algorithm.

6. Location system according to any of the preceding claims, **characterized in that** it is designed such that said signal exchanges are carried out in the ultra wide band range.

7. Location system according to any of the preceding claims, **characterized in that** said at least two reference transmitters (1, 2, 3), two reference receivers respectively, have relative positions with respect to each other which are, a priori, known.

8. Calibration method for a location system, for locating at least one object within a predefined cell, comprising

at least first and second receivers (A, B, C, D), first and second transmitters respectively, including first and second internal clocks (rxA, rxB, rxC, rxD), said receivers, said transmitters respectively, having known locations, a transmitter, a receiver respectively, worn by said object and designed to communicate by means of signal exchanges with said receivers, with said transmitters respectively, electronic circuits designed to compute a position related information of said object based on said signal exchanges,

at least two reference transmitters (1, 2, 3), two reference receivers respectively,

the method comprising the steps consisting in:

a) arranging said reference transmitters (1, 2, 3), said reference receivers respectively, within the cell so that they have a predefined relative distance (dtx1/tx2, dtx1/tx3, dtx2/tx3) with respect to each other,

b) carrying out signal exchanges between said first and second receivers (A, B, C, D) and each of said reference transmitters (1, 2, 3), between said first and second transmitters and each of said reference receivers respectively,

c) programming said electronic circuits so that they compute the signals as received by said first and second receivers (1, 2, 3), by said reference receivers respectively, by means of an analytical computation method, to carry out a calibration of said first and second internal clocks (rxA, rxB, rxC, rxD).

9. Calibration method according to claim 8, when the location system is arranged to carry out three dimension location measurements, the latter comprising at least four receivers (A, B, C, D), at least four transmitters respectively, each of which comprises an internal clock (rxA, rxB, rxC, rxD), **characterised in that** it comprises the steps consisting in:

a) arranging at least a third reference transmitter (3), at least a third reference receiver respectively, within said cell and at predefined relative distances (dtx1/tx3, dtx2/tx3) with respect to the other two reference transmitters (1, 2), with respect to the other two reference receivers respectively,

b) carrying out signal exchanges between said receivers (A, B, C, D) and each of said reference transmitters (1, 2, 3), between said transmitters and each of said reference receivers respectively,

c) programming said electronic circuits so that they compute the signals as received by said receivers (A, B, C, D), by said reference receivers respectively, by means of an analytical computation method, to carry out a calibration of said internal clocks (rxA, rxB, rxC, rxD).

10. Calibration method according to claim 8 or 9, **characterized in that** in step c), one or several of the following assumptions is made:

i) one of said receiver internal clock (rxA, rxB, rxC, rxD), respectively of said transmitter internal clock, is considered to be a master clock,

ii) at least two of said reference transmitters (1, 2, 3), of said reference receivers respectively, are synchronized,

iii) at least two of the reference transmitters are located within a given known plane such that they have one coordinate in common, said coordinate possibly being known.

11. Calibration method according to any of claims 8 to 10, **characterized in that** said computation in step c) involves times of arrival (TOA) of signals.

12. Calibration method according to claim 11, **characterized in that** said computation in step c) further involves angles of arrival of signals and/or strength of arrival of signals.

13. Calibration method according to any of claims 8 to 12, **characterized in that** said signal exchanges are carried out in the ultra wide band range.

14. Calibration method according to any of claims 8 to 13, **characterized in that** the relative positions between said reference transmitters (1, 2, 3) are known.

**Fig. 1**

**Fig. 2**

**Fig. 3**

Fig. 4

$$\mathbf{y} = \mathbf{A} \cdot \mathbf{x}$$

$$
\begin{bmatrix}
\Delta t_{tx_1}^{rx_A} \\
\Delta t_{tx_1}^{rx_B} \\
\Delta t_{tx_1}^{rx_C} \\
\Delta t_{tx_1}^{rx_D} \\
\Delta t_{tx_2}^{rx_A} \\
\Delta t_{tx_2}^{rx_B} \\
\Delta t_{tx_2}^{rx_C} \\
\Delta t_{tx_2}^{rx_D} \\
\Delta t_{tx_3}^{rx_A} \\
\Delta t_{tx_3}^{rx_B} \\
\Delta t_{tx_3}^{rx_C} \\
\Delta t_{tx_3}^{rx_D} \\
\Delta d_{tx_1/tx_2} \\
\Delta d_{tx_1/tx_3} \\
\Delta d_{tx_2/tx_3}
\end{bmatrix}
=
\begin{bmatrix}
\dfrac{x^{rx_A}-\hat{x}_{tx_1}}{c\cdot\hat{R}_{tx_1}^{rx_A}} & \dfrac{y^{rx_A}-\hat{y}_{tx_1}}{c\cdot\hat{R}_{tx_1}^{rx_A}} & \dfrac{z^{rx_A}-\hat{z}_{tx_1}}{c\cdot\hat{R}_{tx_1}^{rx_A}} & 0 & 0 & \cdots \\[1ex]
\dfrac{x^{rx_B}-\hat{x}_{tx_1}}{c\cdot\hat{R}_{tx_1}^{rx_B}} & \dfrac{y^{rx_B}-\hat{y}_{tx_1}}{c\cdot\hat{R}_{tx_1}^{rx_B}} & \dfrac{z^{rx_B}-\hat{z}_{tx_1}}{c\cdot\hat{R}_{tx_1}^{rx_B}} & 0 & 0 & \\[1ex]
\dfrac{x^{rx_C}-\hat{x}_{tx_1}}{c\cdot\hat{R}_{tx_1}^{rx_C}} & \dfrac{y^{rx_C}-\hat{y}_{tx_1}}{c\cdot\hat{R}_{tx_1}^{rx_C}} & \dfrac{z^{rx_C}-\hat{z}_{tx_1}}{c\cdot\hat{R}_{tx_1}^{rx_C}} & 0 & 0 & \\[1ex]
\dfrac{x^{rx_D}-\hat{x}_{tx_1}}{c\cdot\hat{R}_{tx_1}^{rx_D}} & \dfrac{y^{rx_D}-\hat{y}_{tx_1}}{c\cdot\hat{R}_{tx_1}^{rx_D}} & \dfrac{z^{rx_D}-\hat{z}_{tx_1}}{c\cdot\hat{R}_{tx_1}^{rx_D}} & 0 & 0 & \\[1ex]
0 & 0 & 0 & \dfrac{x^{rx_A}-\hat{x}_{tx_2}}{c\cdot\hat{R}_{tx_2}^{rx_A}} & \dfrac{y^{rx_A}-\hat{y}_{tx_2}}{c\cdot\hat{R}_{tx_2}^{rx_A}} & \\[1ex]
0 & 0 & 0 & \dfrac{x^{rx_B}-\hat{x}_{tx_2}}{c\cdot\hat{R}_{tx_2}^{rx_B}} & \dfrac{y^{rx_B}-\hat{y}_{tx_2}}{c\cdot\hat{R}_{tx_2}^{rx_B}} & \\[1ex]
0 & 0 & 0 & \dfrac{x^{rx_C}-\hat{x}_{tx_2}}{c\cdot\hat{R}_{tx_2}^{rx_C}} & \dfrac{y^{rx_C}-\hat{y}_{tx_2}}{c\cdot\hat{R}_{tx_2}^{rx_C}} & \\[1ex]
0 & 0 & 0 & \dfrac{x^{rx_D}-\hat{x}_{tx_2}}{c\cdot\hat{R}_{tx_2}^{rx_D}} & \dfrac{y^{rx_D}-\hat{y}_{tx_2}}{c\cdot\hat{R}_{tx_2}^{rx_D}} & \\[1ex]
0 & 0 & 0 & 0 & 0 & \\[1ex]
0 & 0 & 0 & 0 & 0 & \\[1ex]
0 & 0 & 0 & 0 & 0 & \\[1ex]
0 & 0 & 0 & 0 & 0 & \\[1ex]
\dfrac{\hat{x}_{tx_1}-\hat{x}_{tx_2}}{\hat{R}_{tx_1/tx_2}} & \dfrac{\hat{y}_{tx_1}-\hat{y}_{tx_2}}{\hat{R}_{tx_1/tx_2}} & \dfrac{\hat{z}_{tx_1}-\hat{z}_{tx_2}}{\hat{R}_{tx_1/tx_2}} & \dfrac{\hat{x}_{tx_2}-\hat{x}_{tx_1}}{\hat{R}_{tx_1/tx_2}} & \dfrac{\hat{y}_{tx_2}-\hat{y}_{tx_1}}{\hat{R}_{tx_1/tx_2}} & \\[1ex]
0 & 0 & 0 & \dfrac{\hat{x}_{tx_2}-\hat{x}_{tx_3}}{\hat{R}_{tx_2/tx_3}} & \dfrac{\hat{y}_{tx_2}-\hat{y}_{tx_3}}{\hat{R}_{tx_2/tx_3}} & \\[1ex]
\dfrac{\hat{x}_{tx_1}-\hat{x}_{tx_3}}{\hat{R}_{tx_1/tx_3}} & \dfrac{\hat{y}_{tx_1}-\hat{y}_{tx_3}}{\hat{R}_{tx_1/tx_3}} & \dfrac{\hat{z}_{tx_1}-\hat{z}_{tx_3}}{\hat{R}_{tx_1/tx_3}} & 0 & 0 &
\end{bmatrix}
$$

**Fig. 5a**

**Fig. 5b**

$$
\begin{bmatrix}
0 & 0 & 0 & 0 & 0 & 0 & 0 & 1 & 0 & 0 \\
0 & 0 & 0 & 0 & -1 & 0 & 0 & 1 & 0 & 0 \\
0 & 0 & 0 & 0 & 0 & -1 & 0 & 1 & 0 & 0 \\
0 & 0 & 0 & 0 & 0 & 0 & -1 & 1 & 0 & 0 \\
\dfrac{z^{rx_A} - \hat{z}_{tx_2}}{c \cdot \hat{R}^{rx_A}_{tx_2}} & 0 & 0 & 0 & 0 & 0 & 0 & 0 & 1 & 0 \\
\dfrac{z^{rx_B} - \hat{z}_{tx_2}}{c \cdot \hat{R}^{rx_B}_{tx_2}} & 0 & 0 & 0 & -1 & 0 & 0 & 0 & 1 & 0 \\
\dfrac{z^{rx_C} - \hat{z}_{tx_2}}{c \cdot \hat{R}^{rx_C}_{tx_2}} & 0 & 0 & 0 & 0 & -1 & 0 & 0 & 1 & 0 \\
\dfrac{z^{rx_D} - \hat{z}_{tx_2}}{c \cdot \hat{R}^{rx_D}_{tx_2}} & 0 & 0 & 0 & 0 & 0 & -1 & 0 & 1 & 0 \\
0 & \dfrac{x^{rx_A} - \hat{x}_{tx_3}}{c \cdot \hat{R}^{rx_A}_{tx_3}} & \dfrac{y^{rx_A} - \hat{y}_{tx_3}}{c \cdot \hat{R}^{rx_A}_{tx_3}} & \dfrac{z^{rx_A} - \hat{z}_{tx_3}}{c \cdot \hat{R}^{rx_A}_{tx_3}} & 0 & 0 & 0 & 0 & 0 & 1 \\
0 & \dfrac{x^{rx_B} - \hat{x}_{tx_3}}{c \cdot \hat{R}^{rx_B}_{tx_3}} & \dfrac{y^{rx_B} - \hat{y}_{tx_3}}{c \cdot \hat{R}^{rx_B}_{tx_3}} & \dfrac{z^{rx_B} - \hat{z}_{tx_3}}{c \cdot \hat{R}^{rx_B}_{tx_3}} & -1 & 0 & 0 & 0 & 0 & 1 \\
0 & \dfrac{x^{rx_C} - \hat{x}_{tx_3}}{c \cdot \hat{R}^{rx_C}_{tx_3}} & \dfrac{y^{rx_C} - \hat{y}_{tx_3}}{c \cdot \hat{R}^{rx_C}_{tx_3}} & \dfrac{z^{rx_C} - \hat{z}_{tx_3}}{c \cdot \hat{R}^{rx_C}_{tx_3}} & 0 & -1 & 0 & 0 & 0 & 1 \\
0 & \dfrac{x^{rx_D} - \hat{x}_{tx_3}}{c \cdot \hat{R}^{rx_D}_{tx_3}} & \dfrac{y^{rx_D} - \hat{y}_{tx_3}}{c \cdot \hat{R}^{rx_D}_{tx_3}} & \dfrac{z^{rx_D} - \hat{z}_{tx_3}}{c \cdot \hat{R}^{rx_D}_{tx_3}} & 0 & 0 & -1 & 0 & 0 & 1 \\
\dfrac{\hat{z}_{tx_2} - \hat{z}_{tx_1}}{\hat{R}_{tx_1/tx_2}} & 0 & 0 & 0 & 0 & 0 & 0 & 0 & 0 & 0 \\
\dfrac{\hat{z}_{tx_2} - \hat{z}_{tx_3}}{\hat{R}_{tx_2/tx_3}} & \dfrac{\hat{x}_{tx_3} - \hat{x}_{tx_2}}{\hat{R}_{tx_2/tx_3}} & \dfrac{\hat{y}_{tx_3} - \hat{y}_{tx_2}}{\hat{R}_{tx_2/tx_3}} & \dfrac{\hat{z}_{tx_3} - \hat{z}_{tx_2}}{\hat{R}_{tx_2/tx_3}} & 0 & 0 & 0 & 0 & 0 & 0 \\
0 & \dfrac{\hat{x}_{tx_3} - \hat{x}_{tx_1}}{\hat{R}_{tx_1/tx_3}} & \dfrac{\hat{y}_{tx_3} - \hat{y}_{tx_1}}{\hat{R}_{tx_1/tx_3}} & \dfrac{\hat{z}_{tx_3} - \hat{z}_{tx_1}}{\hat{R}_{tx_1/tx_3}} & 0 & 0 & 0 & 0 & 0 & 0
\end{bmatrix}
\cdot
\begin{bmatrix}
\Delta x_{tx_1} \\
\Delta y_{tx_1} \\
\Delta z_{tx_1} \\
\Delta x_{tx_2} \\
\Delta y_{tx_2} \\
\Delta z_{tx_2} \\
\Delta x_{tx_3} \\
\Delta y_{tx_3} \\
\Delta z_{tx_3} \\
\delta t^{rx_B} \\
\delta t^{rx_C} \\
\delta t^{rx_D} \\
t_{tx_1} \\
t_{tx_2} \\
t_{tx_3}
\end{bmatrix}
$$

Europäisches
Patentamt

European
Patent Office

Office européen
des brevets

**EUROPEAN SEARCH REPORT**

Application Number

EP 10 17 3622

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/260506 A1 (JONES ALED WYNNE [GB] ET AL) 23 December 2004 (2004-12-23) * figure 13 * * paragraph [0045] * * paragraph [0098] * * paragraph [0128] - paragraph [0129] * ----- | 1-14 | INV. G01S5/02 |
| X | WO 03/038469 A1 (QX CORP PTY LTD [AU]; SMALL DAVID [AU]) 8 May 2003 (2003-05-08) * figure 5 * * page 15, line 15 - line 29 * ----- | 1-14 | |
| A | US 7 492 316 B1 (AMETI AITAN [US] ET AL) 17 February 2009 (2009-02-17) * the whole document * ----- | 1-14 | |
| A | US 2002/059535 A1 (BEKRITSKY BENJAMIN J [US] ET AL) 16 May 2002 (2002-05-16) * the whole document * ----- | 1-14 | |
| | | | TECHNICAL FIELDS SEARCHED (IPC) G01S |

The present search report has been drawn up for all claims

| Place of search | Date of completion of the search | Examiner |
|---|---|---|
| Munich | 27 May 2011 | Hekmat, Taymoor |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 10 17 3622

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2011

| Patent document cited in search report | | Publication date | Patent family member(s) | | Publication date |
|---|---|---|---|---|---|
| US 2004260506 | A1 | 23-12-2004 | NONE | | |
| WO 03038469 | A1 | 08-05-2003 | BR | 0213888 A | 11-01-2005 |
| | | | CA | 2479579 A1 | 08-05-2003 |
| | | | CN | 1643395 A | 20-07-2005 |
| | | | CN | 101644755 A | 10-02-2010 |
| | | | CN | 101487882 A | 22-07-2009 |
| | | | CN | 101487889 A | 22-07-2009 |
| | | | EP | 1451606 A1 | 01-09-2004 |
| | | | IL | 161718 A | 03-08-2009 |
| | | | IL | 188514 A | 30-11-2010 |
| | | | JP | 4293907 B2 | 08-07-2009 |
| | | | JP | 2005507085 T | 10-03-2005 |
| | | | JP | 2009145360 A | 02-07-2009 |
| | | | JP | 2009150906 A | 09-07-2009 |
| | | | KR | 20050042242 A | 06-05-2005 |
| | | | KR | 20070116283 A | 07-12-2007 |
| | | | KR | 20070116177 A | 06-12-2007 |
| | | | KR | 20070118678 A | 17-12-2007 |
| | | | MX | PA04004245 A | 31-03-2005 |
| | | | SG | 138489 A1 | 28-01-2008 |
| | | | SG | 146449 A1 | 30-10-2008 |
| | | | SG | 146450 A1 | 30-10-2008 |
| | | | US | 2005001742 A1 | 06-01-2005 |
| | | | US | 2009002238 A1 | 01-01-2009 |
| | | | US | 2007041427 A1 | 22-02-2007 |
| | | | US | 2007040739 A1 | 22-02-2007 |
| US 7492316 | B1 | 17-02-2009 | US | 2009243934 A1 | 01-10-2009 |
| US 2002059535 | A1 | 16-05-2002 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6882315 B2

- WO 2007122394 A1